# EUROPEAN PATENT SPECIFICATION

(11) **EP 3 403 924 B1**
(45) Date of publication and mention of the grant of the patent: **03.06.2020**
(21) Application number: 18162080.8
(22) Date of filing: 15.03.2018
(51) Int. Cl.: B64C 13/18, B64C 13/50

(54) **IN-COCKPIT CONTROL OF A FIXED WING AIRCRAFT**
COCKPITINTERNE STEUERUNG EINES STARRFLÜGELLUFTFAHRZEUGS
COMMANDE DANS LE POSTE DE PILOTAGE D'UN AÉRONEF À VOILURE FIXE

(30) Priority: 16.05.2017 US 201762506840 P
(43) Date of publication of application: 21.11.2018
(73) Proprietor: Sikorsky Aircraft Corporation, Stratford, CT 06615 (US)
(72) Inventor: CHEREPINSKY, Igor, Sandy Hook, CT Connecticut 06482 (US); BARAN, Michael, Prospect, CT Connecticut 06712 (US); VISINSKI, Nicholas C., Milford, CT Connecticut 06460 (US)
(74) Representative: Schmitt-Nilson Schraud Waibel Wohlfrom Patentanwälte Partnerschaft mbB

(56) References cited:
- US-A- 5 868 359
- US-A1- 2005 056 730
- US-A1- 2015 197 329

## Description

This invention was made with government support with the United States Government under DARPA Contract No.: HR001 1-15-9-0004. The government therefore has certain rights in this invention.

Aspects of the present invention are directed to a system for flying an aircraft and, in particular, to a system for providing a pilot of an optionally piloted vehicle (OPV) with correct positioning of piloting inputs when a flight control system changes between an autonomous mode and a manual.

Aircraft autopilot systems are employed to take over flight operations from a pilot while an aircraft is airborne. Autopilot systems generally are installed in an aircraft during manufacture of the aircraft and are designed and programmed to work within the specifications of the particular aircraft into which the autopilot system has been installed. Current autopilot systems have low rate, limited motion controls and are not capable of high performance stabilization and control. For example, current auto pilot systems may only provide the ability to control flight operations while airborne but not during take-off or landing. For legacy aircraft that do not have autopilot systems installed, the costs for upgrading the aircraft by installing an autopilot system can be prohibitive.
US 5 868 359 A discloses a system for backdriving the flight deck controllers of a fly-by-wire aircraft that is under autopilot control to provide a pilot with tactile and visual feedback of autopilot activity. The system, distributed between the aircraft primary flight computers and the autopilot flight computer, uses actuators mechanically coupled to each flight deck controller to position the flight deck controller to mimic manual operation of the flight control surfaces. Additionally, the system allows smooth disengagement of the autopilot and transfer of the aircraft to pilot control when the pilot takes control of any flight deck controller by moving it from a backdrive system-commanded position by a predetermined displacement for a predetermined time. The system orients flight deck controllers of an aircraft that is flying under autopilot control, to correspond with the relative orientation of those flight control surfaces that the flight deck controllers would ordinarily control, when the aircraft is under pilot control.
US 2005/056730 A1 discloses an automatic pilot apparatus which is installable in an aircraft. An object is to significantly simplify the refurbishment work on installation of an automatic pilot apparatus in an aircraft. For example, the automatic pilot apparatus is mounted on a pilot seat of a fixed wing manned aircraft to construct a system which enables automatic piloting.
US 2015/197329 A1 discloses methods and an apparatus of notification of a flight asymmetry influencing an aircraft. An example method includes monitoring a roll characteristic of an aircraft and determining an output of an autopilot system of the aircraft to control the roll characteristic. The example method further includes generating an alert based on the output and an authority of the autopilot system to control the roll characteristic.
The invention relates to a device for flying an aircraft according to claim 1 and to a method for flying an aircraft according to claim 8.

These and other advantages and features will become more apparent from the following description taken in conjunction with the drawings.

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 depicts an aircraft that can be flown using a flight control system according to aspects of the present disclosure.
FIG. 2 depicts a block diagram of a flight control system of an aircraft according to aspects of the present disclosure;
FIG. 3 depicts a switch control device for actuating a switch of the aircraft according to aspects of the present disclosure;
FIG. 4 depicts a view of the cockpit of the aircraft of FIG. 1 including a separately installable automatic flight control device for automatic control and flight of the aircraft according to aspects of the present disclosure;
FIG. 5 depicts a flight control system for controlling the automatic flight control device of FIG. 4 according to aspects of the present disclosure; and
FIG. 6 depicts a method for flying an aircraft according to aspects of the present disclosure.

There exists a desire to have a compact, quickly installable system that can be adapted to any aircraft cockpit to act as an advanced auto pilot or to completely operate the aircraft with or without a human pilot onboard. Some fixed wing aircraft have an autopilot system distributed throughout the aircraft. However, these systems are low bandwidth and are not very reliable. Moreover, many autopilot systems are not designed to fly the aircraft without human pilots on board.

The embodiments described herein provide a system that can be distributed throughout the airframe of an aircraft (e.g., a fixed wing aircraft) to operate the controls, including secondary controls (e.g., a throttle, landing gear lever, switches, etc.) of the aircraft. The system can include a vehicle management computer(s), a high performance computer(s), an aircraft state sensor(s), and an electromechanical actuator(s) to actuate primary and secondary controls of the aircraft.

Aspects of the present invention provide a pilot of an optionally piloted vehicle (OPV) with correct positioning of piloting inputs (e.g., switches, throttle control, landing gear lever, etc.) when a flight control system changes between an autonomous mode and a manual (i.e., non-autonomous) mode. Accordingly, the piloting inputs remain in the position (i.e., a "correct" position) that they would normally be in if the pilot were flying the aircraft. This prevents the pilot from seeing a visually different position of a piloting input than the flight control device recognizes the piloting input to be. For example, if the flight control system increases the throttle while controlling the aircraft in the autonomous mode, an actuator coupled to the throttle control changes the position of the throttle control to match the throttle setting recognized by the autonomous mode. If the autonomous mode then disengages, the throttle visually (to the pilot) matches the flight control device's throttle setting. This prevents the piloting inputs from changing when the flight control system changes between autonomous and manual modes.

The present techniques provide a full authority, high bandwidth system with the reliability to fly full envelope with or without pilots on board. The present techniques are also adaptable to older aircraft that do not have autopilot systems already installed. The present techniques can also be used to articulate secondary controls in order to reduce pilot workload, reduce crew requirements, and/or enable autonomous flight. During day-to-day flight operations, pilots rely on checklists to ensure secondary controls are set correctly during each phase of a flight. In aircraft certified for two pilot operations, some secondary controls (piloting inputs) are positioned to align with crew tasks and are not necessarily within reach of a second pilot. During certain phases of flight, pilot workload is very high; this workload can be even higher in single pilot certified aircraft.

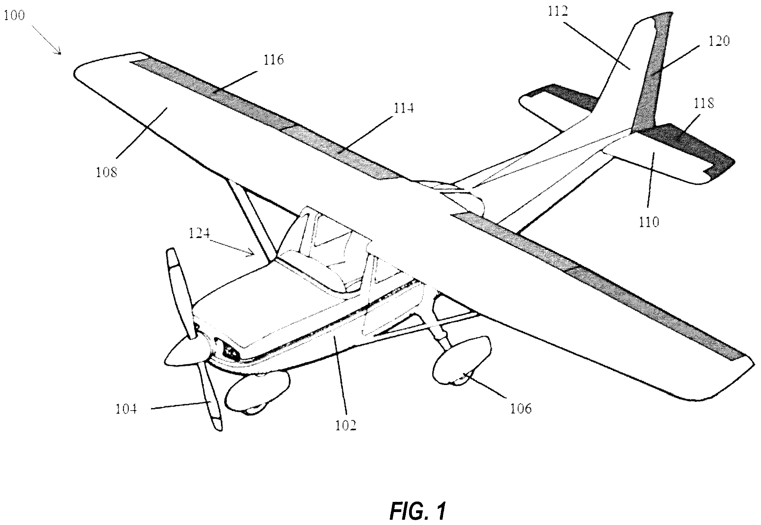

Referring now to the figures, where embodiments of the invention are described with reference to specific embodiments, without limiting same, FIG. 1 schematically depicts an example of an aircraft 100 that can be flown using the flight control system disclosed herein. The aircraft 100 is a fixed wing aircraft that includes a fuselage 102, propeller 104, and landing gear 106. The aircraft 100 further includes a wing 108 near a front of the aircraft 100, a horizontal stabilizer 110, and a vertical stabilizer 112 at a rear of the aircraft 100. The wing 108 includes flaps 114 and ailerons 116 that can be moved up and down with respect to the wing 108 in order to control flight of the aircraft 100. The horizontal stabilizer 110 includes elevators 118 that can be moved up and down to control a pitch of the aircraft 100. The vertical stabilizer 112 includes a rudder 120 that controls a yaw of the aircraft 100.

The aircraft 100 includes a cockpit 124 that includes, for example, room or seats for a pilot and/or a co-pilot. In various embodiments, cockpit 124 also includes seats for passengers. Various flight controls in the cockpit 124 are operated to move the parts of the aircraft 100 such as the flaps 114, ailerons 116, elevators 118, and rudder 120, for example, to control the aircraft 100. The aircraft 100 may also include a set of sensors (not shown) that obtain flight data with regard to the aircraft 100, such as altitude, flight speed, etc. This flight data can be displayed to a pilot of the aircraft 100 at an instrument panel in order to aid the pilot in flying the aircraft 100.

Although a particular aircraft configuration is illustrated and described in the disclosed embodiment, other configurations of aircraft and vehicles, such as multi-engine fixed wing aircraft, vertical take-off and landing (VTOL) rotary wing aircraft, high speed compound rotary wing aircraft with supplemental translational thrust systems, dual contra-rotating, coaxial rotor system aircraft, tilt-rotors and tilt-wing aircraft, may also benefit from embodiments of the disclosure.

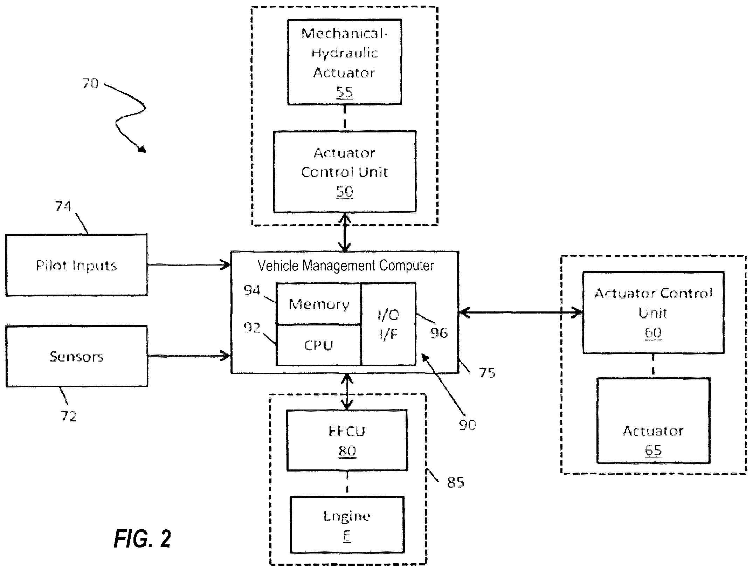

FIG. 2 a block diagram of a flight control system 70 of the aircraft 100 according to aspects of the present disclosure. Portions of the aircraft 100, such as flaps 114, ailerons 116, elevators 118, and rudder 120, for example, are controlled by a flight control system 70. In one embodiment, the flight control system 70 is a fly-by-wire (FBW) control system. In a FBW control system, there is no direct mechanical coupling between a pilot's controls and movable components or control surfaces, such as flaps 114 and ailerons 116 for example, of the aircraft 100 of FIG. 1. Instead of using mechanical linkages, a FBW control system includes a plurality of sensors 72 which can sense the position of controlled elements and generate electrical signals proportional to the sensed position. The sensors 72 may also be used directly and indirectly to provide a variety of aircraft state data to a vehicle management computer (VMC) 75. The VMC 75 may also receive pilot commands 74 as control commands to control the lift, propulsive thrust, yaw, pitch, and roll forces and moments of the various control surfaces of the aircraft 100.

In response to inputs from the sensors 72 and pilot commands 74, the VMC 75 transmits signals to various subsystems of the aircraft 100. The VMC 75 can use reference values in the pilot commands 74 for feed forward control to quickly respond to changes in the reference values and can perform feedback control to reject disturbances detected via the sensors 72. Pilot commands 74 can be in the form of stick commands and/or beeper commands to set and incrementally adjust reference values for controllers. The pilot commands 74 need not be directly provided by a human pilot, but may be driven by an automatic pilot, a remote control, a navigation-based control, or one or more outer control loops configured to produce one or more values used to pilot the aircraft 100.

The aircraft 100 includes a first actuator control unit 50 configured to receive commands from the VMC 75 to control one or more actuators 55, such as a mechanical-hydraulic actuator, for flaps 114, ailerons 116, elevators 118, and rudder 120, for example. In an embodiment, pilot commands 74 including cyclic and/or collective commands may result in the actuator control unit 50 driving the one or more actuators 55 to adjust aspects of the aircraft 100. Alternatively, the VMC 75 can directly control the one or more actuators 55, and the actuator control unit 50 can be omitted.

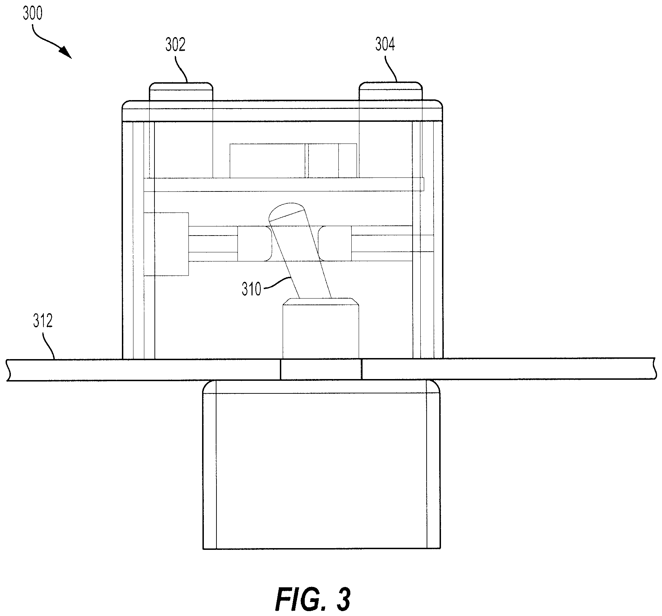

The aircraft 100 includes a second actuator control unit 60 configured to receive commands from the VMC 75 to control one actuator 65, such as a switch control actuator 300 depicted in FIG. 3, for controlling a switch, throttle control, landing gear lever, for example, of the aircraft 100. In an embodiment, the VMC 75, operating in an autonomous mode or an optionally piloted vehicle (OPV) move can cause the actuator control unit 60 driving the one or more actuators 65 to adjust piloting inputs (not shown), such as a switch (e.g., the switch 310 of FIG. 3), a throttle control, a landing gear lever, etc.

The VMC 75 can also interface with an engine control system 85 including one or more electronic engine control units (EECUs) 80 to control one or more engines (not shown) of the aircraft 100. Each EECU 80 may be a digital electronic control unit such as Full Authority Digital Engine Control (FADEC) electronically interconnected to a corresponding engine. Each engine may include one or more instances of the EECU 80 to control engine output and performance. Engines may be commanded in response to the pilot commands 74, such as a throttle command.

Rather than simply passing pilot commands 74 through to various control units 50, 60, and 80, the VMC 75 includes a processing system 90 that applies models and control laws to augment commands. The processing system 90 includes processing circuitry 92, memory 94, and an input/output (I/O) interface 96. The processing circuitry 92 can be any type or combination of computer processors, such as a microprocessor, microcontroller, digital signal processor, application specific integrated circuit, programmable logic device, and/or field programmable gate array, and is generally referred to as central processing unit (CPU) 92. The memory 94 can include volatile and non-volatile memory, such as random access memory (RAM), read only memory (ROM), or other electronic, optical, magnetic, or any other computer readable storage medium onto which data and control logic as described herein are stored. Therefore, the memory 94 is a tangible storage medium where instructions executable by the processing circuitry 92 are embodied in a non-transitory form. The I/O interface 96 can include a variety of input interfaces, output interfaces, communication interfaces and support circuitry to acquire data from the sensors 72, pilot commands 74, and other sources (not depicted) and may communicate with the control units 50, 60, 80, and other subsystems (not depicted).

FIG. 3 depicts a switch control device 300 for actuating a switch 310 of the aircraft 100 according to aspects of the present disclosure. The switch 310 can be, for example, a lighting control switch, or another switch used to control an aspect or feature of the aircraft 100. One or more switches of the aircraft 100 can include a switch control device such that individual switch actuation is provided. The switch control device 300 can be controlled by the VMC 75 of the aircraft 100.

A pilot of the aircraft 100 can override the switch control device 300 by pressing one of the buttons 302, 304 to cause the switch to change positions. In some examples, if the pilot overrides the switch control device 300 while the VMC 75 is in an autonomous mode, the VMC 75 changes to a non-autonomous (i.e., manual) mode. In the example of FIG. 3, the switch 310 is in a first position. If the pilot presses the button 304, the switch control device 300 causes the switch to change positions to a second position. It may be particularly useful to override a switch control device quickly if a pilot detects a malfunction. A power shutoff switch can be implemented to disconnect power from the switch control device 300. A secondary shutoff switch (or emergency disengage switch) can also be implemented to disconnect power. This provides redundancy in case of an emergency.

The switch control device 300 can be removably mounted to a surface 312 of the aircraft 100. This enables the switch control device 300 to be removed. For example, the switch control device 300 can be magnetically mounted to the surface 312, which enables the pilot to easily remove the switch control device 300, such as to gain access to the switch, to cause the VMC 75 to change to a non-autonomous mode, etc.

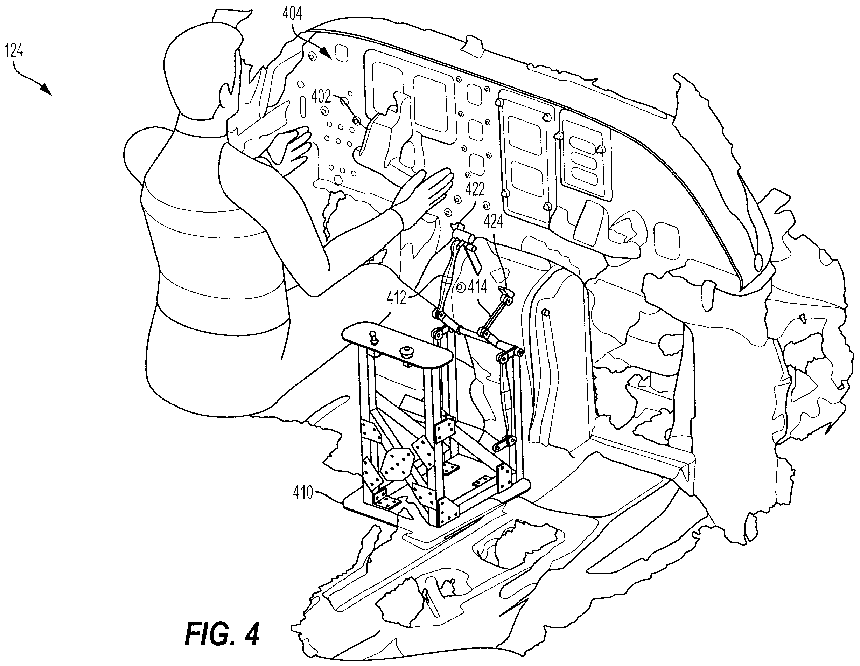

In another example, the switch control device 300 can be a removable arm that can actuate the switch 310. An example of a removable arm is illustrated in FIG 4 regarding the flight control device 410.

FIG. 4 depicts a view of the cockpit 124 of the aircraft 100 of FIG. 1 including a separately installable automatic flight control device 410 for automatic control and flight of the aircraft 100 according to aspects of the present disclosure. The cockpit 124 includes a pilot's flight control devices such as yoke 402 for control of the pitch and/or roll of aircraft 100 and pedals (not shown) for control of the yaw of aircraft 100. Yoke 402 and the pedals are also provided on the co-pilot's side of the aircraft 100. An instrument panel 404 provides flight data that is displayed to the pilot or co-pilot during flight in order to aid the pilot in flying the aircraft 100.

The flight control device 410 enables secondary controls of the aircraft 100, such as flaps, power levers, landing gear levers, switches, throttles, and the like, to be actuated without pilot interference. Secondary controls can be controlled by mechanically actuating a piloting input, driving a relay with a vehicle management computer, enabling/disabling power through an electronic circuit breaker, and the like. The flight control device 410 is adaptable to multiple platforms/aircraft and may be created by using a 3D scan of an aircraft to measure the aircraft and ensure compatibility, reliability, accuracy, and consistency.

The flight control device 410 is an actuator (e.g., an electromechanical actuator) that can be actuated to control a piloting input, such as a throttle or landing gear lever, as shown in FIG. 4, or a switch as shown in FIG. 3. The flight control device 410 can include a first arm 412 coupled to a throttle 422 and a second arm 414 coupled to a landing gear lever 424. The first arm 412 and the second arm 414 can be actuated by actuators (not shown) to move the throttle 422 and the landing gear lever 424 respectively. This enables the pilot to visually see the accurate/correct position of the throttle 422 and the landing gear lever 424 even when the flight control system (described below) changes positions of the throttle 422 or the landing gear lever 424. Accordingly, when the flight control system is changed from an autonomous mode to a manual mode, the throttle 422 and the landing gear lever 424 remain in their correct positions. It should be appreciated that the same principles can be applied to other piloting inputs of the aircraft 100.

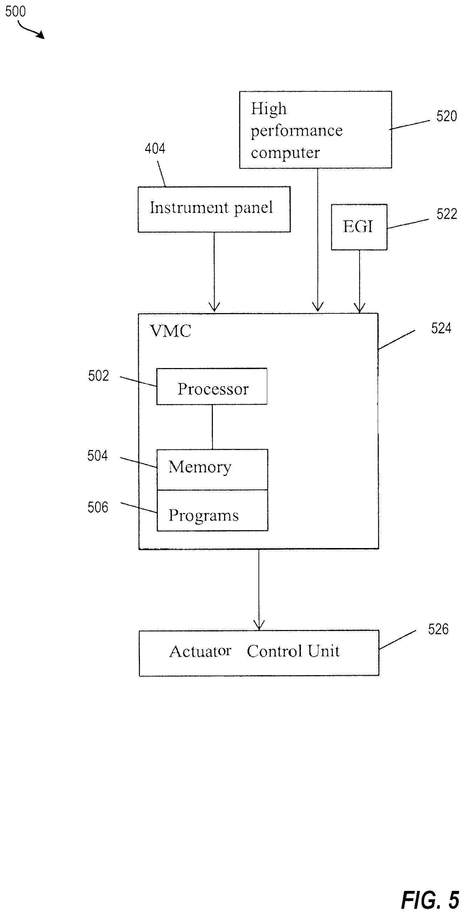

The flight control device 410 can be controlled by a flight control system, such as the flight control system 70 of FIG 2 and/or the flight control system 500 of FIG. 5. In particular, FIG. 5 illustrates a flight control system 500 for controlling the automatic flight control device 410 according to aspects of the present disclosure. The flight control system 500 includes a high performance computer 520, a first Embedded Global Positioning Satellite and Inertial Navigation System (EGI) 522, a first vehicle management computer (VMC) 524 and a second actuator control unit 526.

Although not illustrated, the flight control system 500 can also include a second EGI, a second VMC, and another actuator control unit. In one embodiment, first EGI 522, first VMC 524 and second actuator control unit 526 are used to control flight control devices (e.g., the flight control device 410). The second EGI, second VMC, and the other actuator control unit (and additional actuators) can also control these flight control devices and are provided for redundancy and/or backup. In addition, a triple or quadruple redundancy can be used in alternate embodiments. For illustrative purposes only, the actions of flying the aircraft is discussed herein only with respect to high performance computer 520, first EGI 522, first VMC 524, and the second actuator control unit 526. However it is to be understood that such discussion applies equally to the second EGI, second VMC, and the other actuator control unit or any other redundant units.

The high performance computer 520 is configured to execute high level intelligence algorithms to operate the aircraft autonomously. For example, the high performance computer 512 can include programs for computing flight plans, including obstacle avoidance and other features. The high performance computer 520 can be connected to a LIDAR (light detecting and ranging) system that obtains a terrain of the landscape over which the aircraft 100 is flying. The first EGI 522 includes an Inertial Navigation System for obtaining an inertial rate data of the aircraft as well as Global Positioning Satellite (GPS) system for obtaining location measurements for the aircraft 100. The VMC 524 is a vehicle management computer that contains primary flight control laws for the aircraft and executes fault detection and contingency plans. The VMC 524 receives flight plan data from the high performance computer 520 and inertial rate and location data from the EGI 522. The VMC 524 may also be connected to a flight instrument panel 404 via a wire or bus of wires and receives flight data from the flight instrument panel 404 over the wire or bus or wires.

The VMC 524 performs calculations based on the data it receives and determines a flight command for the aircraft 100. For example, the VMC 524 obtains a flight state of the aircraft such as altitude, flight speed, direction, etc., compares the flight state to the flight plan and determines a flight command of the aircraft to change the flight state in order to fly the aircraft 100 according to the flight plan. The VMC 524 then sends the flight command to the actuator control unit 526 in order to implement the flight command at the aircraft 100.

The second actuator control unit 526 operates actuators that move piloting inputs, such as the switch control device 300, in any suitable direction, such as forward/backward, side-to-side, etc., to control an aspect of the aircraft 100. Each actuator control unit is capable of driving a set of the flight control devices in order to fly the aircraft and/or to assist a pilot in to fly the aircraft. For example, the second actuator control unit 526 can operate actuators coupled to secondary controls of the aircraft 100, such as landing gear levers, throttle controls, switches, etc. to perform secondary functions to assist the pilot. In this way, the flight control system 500 can act as a co-pilot to control secondary aspects of the aircraft 100 to assist the pilot in flying the aircraft.

The first VMC 224 includes a processor 502 for performing various calculations to determine flight adjustments for flying the aircraft 100 according to a flight plan. The processor 502 is in communication with a memory storage device 504 that includes various programs for operating the aircraft 100, such as programs for making flight adjustment to fly according to a flight plan, etc. The processor 502 determines a course of action based measurements from the instrument panel 508, flight plans from the high performance computer 520 and inertial rate and GPS data from the first EGI 522 and decides upon a course of action, such as to change altitude, bank left or bank right, increase flight speed, etc. The processor 502 determines which flight control parameters to change, such as angles of flaps 114, ailerons 116, elevators 118, and rudder 120, throttle adjustments, landing gear lever adjustments, switch adjustments, etc., and to what degree and operates the first actuator unit 526 to implement the changes to the flight control parameter at the aircraft 100. In one embodiment, first VMC 524 determines a viable range for flying the aircraft and flies the aircraft 100 within the viable range of motion.

The flight control system 500 is able to control flight of the aircraft through an entire envelope of flight procedures, i.e., during take-off, flight, and/or landing. The flight control system 500 can fly the aircraft 100 with or without a pilot on board. Additionally, the programs 506 include generic flight functions and procedures that can be applied to fly different types of aircraft. Therefore, the flight control system 500 can fly a first aircraft, then removed from the first aircraft and installed in a second aircraft in order to fly the second aircraft.

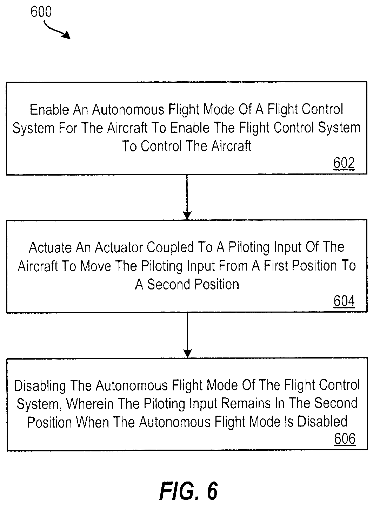

FIG. 6 depicts a method 600 for flying an aircraft according to aspects of the present disclosure. The method 600 begins at block 602 and includes enabling an autonomous flight mode of a flight control system for the aircraft to enable the flight control system to control the aircraft. At block 604, the method includes actuating an actuator coupled to a piloting input of the aircraft to move the piloting input from a first position to a second position. At block 606, the method includes disabling the autonomous flight mode of the flight control system. The piloting input remains in the second position when the autonomous flight mode is disabled. The flight mode can be disabled using force disengagement (e.g., when a pilot applies a force to a control of the aircraft), by the pilot selecting a disengagement option (e.g., pressing a disengagement/off button), or by other suitable means.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description.

## Claims

1. A device (70, 500) for flying an aircraft (100), comprising:
a vehicle management computer (75, 524) configured to position a plurality of control surfaces of the aircraft (100) to control the aircraft, wherein the vehicle management computer (75) is configured to receive pilot commands (74);
a first actuator control unit (50) configured to receive commands from the vehicle management computer (75) to control one or more actuators (55) for controlling the aircraft (100);
a high performance computer (520) being configured to execute one or more high level intelligence algorithms to selectively operate the aircraft (100) autonomously in an autonomous flight mode;
a piloting input (310) and a separately installable actuator (65, 300, 410) coupled to the piloting input, wherein the piloting input controls an aspect of the aircraft and is selected from the group consisting of a switch, a throttle control, a landing gear lever, a flap, and a power lever; and
a second actuator control unit (60, 526) configured to receive commands from the vehicle management computer (75, 524) to actuate the actuator (65, 300, 410) coupled to the piloting input to move the piloting input from a first position to a second position and such that the piloting input remains in the second position when the autonomous flight mode is disabled.

2. The device of claim 1, further comprising:
an inertial measurement system configured to obtain inertial data of the aircraft (100) and location data of the aircraft (100) and to provide the inertial data and the location data to at least one of the vehicle management computer (75) or the high performance computer.

3. The device of claim 2, wherein operating the aircraft (100) is based at least in part on the inertial data and the location data.

4. The device of one of claims 1-3, further comprising:
a light detecting and ranging (LIDAR) system configured to obtain terrain data of a landscape over which the aircraft is flying.

5. The device of claim 4, wherein operating the aircraft (100) is based at least in part on the terrain data.

6. The device of one of claims 1-5, wherein the actuator (65, 410) is an electromechanical actuator.

7. The device of one of claims 1-6, wherein the actuator (65, 410) is a movable arm.

8. A method for flying an aircraft (100) using a device according to one of the preceding claims, comprising:
enabling the autonomous flight mode of the flight control device (70, 500) for the aircraft (100) to enable the flight control device (70, 500) to control the aircraft (100) by controlling with the first actuator control unit (50) the one or more actuators (55);
actuating, by the second actuator control unit (60, 526), the actuator (65, 300, 410) coupled to the piloting input (310) of the aircraft (100) to move the piloting input from the first position to the second position; and
disabling the autonomous flight mode of the flight control device (70, 500), wherein the piloting input remains in the second position when the autonomous flight mode is disabled.

9. The method of claim 8, wherein the autonomous flight mode is disabled responsive to a force disengagement from a pilot of the aircraft (100).

10. The method of claim 8 or 9, wherein the autonomous flight mode is disabled responsive to a pilot of the aircraft (100) disabling the autonomous flight mode.

11. The method of one of claims 8-10, wherein the actuator (65, 410) is an electromechanical actuator.

12. The method of one of claims 8-11, wherein the actuator (65, 410) is a movable arm.

13. The method of one of claims 8-12, wherein the actuator (65, 410) is external to the piloting input.

## Patentansprüche

1. Vorrichtung (70, 500) zum Fliegen eines Luftfahrzeugs (100), umfassend:
einen Fahrzeugmanagementrechner (75, 524), der konfiguriert ist, um eine Vielzahl von Steuerflächen des Luftfahrzeugs (100) zu positionieren, um das Luftfahrzeug zu steuern, wobei der Fahrzeugmanagementrechner (75) konfiguriert ist, um Pilotenbefehle (74) zu empfangen;
eine erste Aktuatorsteuereinheit (50), die konfiguriert ist, um Befehle vom Fahrzeugmanagementrechner (75) zu empfangen, um einen oder mehrere Aktuatoren (55) zum Steuern des Luftfahrzeugs (100) zu steuern;
einen Hochleistungsrechner (520), der konfiguriert ist, um einen oder mehrere hochintelligente Algorithmen auszuführen, um das Luftfahrzeug (100) selektiv autonom in einem autonomen Flugmodus zu betreiben;
einen Ansteuerungseingang (310) und einen gesondert installierbaren Aktuator (65, 300, 410), der an den Ansteuerungseingang gekoppelt ist, wobei die Ansteuerungseingang einen Aspekt des Luftfahrzeugs steuert und aus der Gruppe ausgewählt ist, die aus einem Schalter, einem Drosselklappen-, einem Fahrwerkswahlhebel, einer Klappe und einem Leistungshebel besteht; und
eine zweite Aktuatorsteuereinheit (60,526), die konfiguriert ist, um Befehle von dem Fahrzeugmanagementrechner (75, 524) zu empfangen, um den Aktuator (65, 300, 410), der an dem Ansteuerungseingang gekoppelt ist, zu betätigen, um den Ansteuerungseingang von einer ersten Position auf eine zweite Position zu bewegen, und so dass der Ansteuerungseingang in der zweiten Position bleibt, wenn der autonome Flugmodus deaktiviert ist.

2. Vorrichtung nach Anspruch 1, ferner umfassend:
ein inertiales Messsystem, das konfiguriert ist, um Inertialdaten des Luftfahrzeugs (100) und Standortdaten des Luftfahrzeugs (100) zu erhalten und um die Inertialdaten und die Standortdaten mindestens einem aus dem Fahrzeugmanagementrechner (75) oder dem Hochleistungsrechner bereitzustellen.

3. Vorrichtung nach Anspruch 2, wobei das Betreiben des Luftfahrzeugs (100) mindestens teilweise auf den Inertialdaten und den Standortdaten basiert.

4. Vorrichtung nach einem der Ansprüche 1-3, ferner Folgendes umfassend:
ein Light-detecting-and-ranging(LIDAR)-System, das konfiguriert ist, um Geländedaten einer Landschaft, über die das Luftfahrzeug gerade fliegt, zu erhalten.

5. Vorrichtung nach Anspruch 4, wobei das Betreiben des Luftfahrzeugs (100) mindestens teilweise auf den Geländedaten basiert.

6. Vorrichtung nach einem der Ansprüche 1-5, wobei der Aktuator (65, 410) ein elektromechanischer Aktuator ist.

7. Vorrichtung nach einem der Ansprüche 1-6, wobei der Aktuator (65, 410) ein beweglicher Arm ist.

8. Verfahren zum Fliegen eines Luftfahrzeugs (100) unter Verwendung einer Vorrichtung nach einem der vorstehenden Ansprüche, umfassend:
Aktivieren des autonomen Flugmodus der Flugsteuerungsvorrichtung (70, 500) für das Luftfahrzeug (100), um es der Flugsteuerungsvorrichtung (70, 500) zu ermöglichen, das Luftfahrzeug (100) durch Steuern mit der ersten Aktuatorsteuereinheit (50) des einen oder der mehreren Aktuatoren (55) zu steuern;
Betätigen, durch die zweite Aktuatorsteuereinheit (60, 526), des Aktuators (65, 300, 410), der mit dem Ansteuerungseingang (310) des Luftfahrzeugs (100) gekoppelt ist, um den Ansteuerungseingang von der ersten Position auf die zweite Position zu bewegen; und
Deaktivieren des autonomen Flugmodus der Flugsteuerungsvorrichtung (70, 500), wobei der Ansteuerungseingang in der zweiten Position bleibt, wenn der autonome Flugmodus deaktiviert ist.

9. Verfahren nach Anspruch 8, wobei der autonome Flugmodus als Reaktion auf eine Kraftabschaltung von einem Piloten des Luftfahrzeugs (100) deaktiviert wird.

10. Verfahren nach Anspruch 8 oder 9, wobei der autonome Flugmodus als Reaktion darauf, dass ein Pilot des Luftfahrzeugs (100) den autonomen Flugmodus deaktiviert, deaktiviert wird.

11. Verfahren nach einem der Ansprüche 8-10, wobei der Aktuator (65, 410) ein elektromechanischer Aktuator ist.

12. Verfahren nach einem der Ansprüche 8-11, wobei der Aktuator (65, 410) ein beweglicher Arm ist.

13. Verfahren nach einem der Ansprüche 8-12, wobei der Aktuator (65, 410) außerhalb des Ansteuerungseingangs liegt.

## Revendications

1. Dispositif (70, 500) pour le vol d'un aéronef (100), comprenant :
un ordinateur de gestion de véhicule (75, 524) configuré pour positionner une pluralité de surfaces de commande de l'aéronef (100) pour commander l'aéronef, dans lequel l'ordinateur de gestion de véhicule (75) est configuré pour recevoir des instructions de pilote (74) ;
une première unité de commande d'actionneur (50) configurée pour recevoir des instructions de l'ordinateur de gestion de véhicule (75) pour commander un ou plusieurs actionneurs (55) pour la commande de l'aéronef (100) ;
un ordinateur à haute performance (520) étant configuré pour exécuter un ou plusieurs algorithmes d'intelligence de haut niveau pour actionner sélectivement l'aéronef (100) de manière autonome dans un mode de vol autonome ;
une entrée de pilotage (310) et un actionneur pouvant être installé séparément (65, 300, 410) couplé à l'entrée de pilotage, dans lequel l'entrée de pilotage commande un aspect de l'aéronef et est sélectionnée parmi le groupe composé d'un commutateur, d'une commande d'accélération, d'un levier de commande de train, d'un volet, et d'une manette de poussée ; et
une seconde unité de commande d'actionneur (60, 526) configurée pour recevoir des instructions de l'ordinateur de gestion de véhicule (75, 524) pour actionner l'actionneur (65, 300, 410) couplé à l'entrée de pilotage pour déplacer l'entrée de pilotage d'une première position à une seconde position et de sorte que l'entrée de pilotage reste dans la seconde position lorsque le mode de vol autonome est désactivé.

2. Dispositif selon la revendication 1, comprenant en outre :
un système de mesure d'inertie configuré pour obtenir des données d'inertie de l'aéronef (100) et des données d'emplacement de l'aéronef (100) et pour fournir les données d'inertie et les données d'emplacement à au moins l'un de l'ordinateur de gestion de véhicule (75) et de l'ordinateur à haute performance.

3. Dispositif selon la revendication 2, dans lequel l'actionnement de l'aéronef (100) repose au moins en partie sur les données d'inertie et les données d'emplacement.

4. Dispositif selon l'une quelconque des revendications 1-3, comprenant en outre :
un système de détection et localisation par la lumière (LIDAR) configuré pour obtenir des données de terrain d'un paysage sur lequel l'aéronef vole.

5. Dispositif selon la revendication 4, dans lequel l'actionnement de l'aéronef (100) repose au moins en partie sur les données de terrain.

6. Dispositif selon l'une des revendications 1-5, dans lequel l'actionneur (65, 410) est un actionneur électromécanique.

7. Dispositif selon l'une des revendications 1-6, dans lequel l'actionneur (65, 410) est un bras mobile.

8. Procédé de vol d'un aéronef (100) utilisant un dispositif selon l'une des revendications précédentes, comprenant :
la permission du mode de vol autonome du dispositif de commande de vol (70, 500) pour l'aéronef (100) pour permettre au dispositif de commande de vol (70, 500) de commander l'aéronef (100) en commandant avec la première unité de commande d'actionneur (50) le ou les actionneurs (55) ;
l'actionnement, par la seconde unité de commande d'actionneur (60, 526), de l'actionneur (65, 300, 410) couplé à l'entrée de pilotage (310) de l'aéronef (100) pour déplacer l'entrée de pilotage de la première position à la seconde position ; et
la désactivation du mode de vol autonome du dispositif de commande de vol (70, 500), dans lequel l'entrée de pilotage reste dans la seconde position lorsque le mode de vol autonome est désactivé.

9. Procédé selon la revendication 8, dans lequel le mode de vol autonome est désactivé en réponse à un désengagement de force d'un pilote de l'aéronef (100).

10. Procédé selon la revendication 8 ou 9, dans lequel le mode de vol autonome est désactivé en réponse à la désactivation par un pilote de l'aéronef (100) du mode de vol autonome.

11. Procédé selon l'une des revendications 8-10, dans lequel l'actionneur (65, 410) est un actionneur électromécanique.

12. Procédé selon l'une des revendications 8-11, dans lequel l'actionneur (65, 410) est un bras mobile.

13. Procédé selon l'une des revendications 8-12, dans lequel l'actionneur (65, 410) est externe à l'entrée de pilotage.
